# EUROPEAN PATENT APPLICATION

(11) **EP 4 491 887 A1**
(43) Date of publication of application: **15.01.2025**
(21) Application number: 24186867.8
(22) Date of filing: 05.07.2024
(51) Int. Cl.: F16B 7/18, F16B 37/04, A47B 96/14, E04B 1/58, F16B 12/50

(54) **IMPROVED PROFILED CONSTRUCTION ELEMENT**

(30) Priority: 10.07.2023 IT 202300014346
(71) Applicant: Reco S.r.l., 23875 Osnago (LC) (IT)
(72) Inventor: GALETTI, Davide Gianni Mario, I-23875 Osnago (LC) (IT); REDAELLI, Guido, I-23875 Osnago (LC) (IT)
(74) Representative: Mati, Silvia

(57) **Abstract**

The present invention relates to a profiled construction element (10) comprising a body (11) with a longitudinal extension with a substantially constant cross section along an extension direction (A), wherein the longitudinal body (11) comprises at least one longitudinal cavity (12,12') which extends along the longitudinal body (11), parallel to the longitudinal extension direction (A), the at least one longitudinal cavity (12,12') being obtained inside the longitudinal body (11) and being defined at least by one inner bottom wall (15) and a pair of inner side walls (16,17), the at least one longitudinal cavity (12,12') being open at least at a front groove (13) obtained as an opening with longitudinal extension parallel to the extension direction (A) made on a sidewall (14) of the longitudinal body (11) facing the bottom wall (15), the front groove (13) being characterised by an opening width (Wa), the at least one longitudinal cavity (12,12') being characterised by a minimum cavity width (W), measured between the pair of inner side walls (16,17), and a cavity height (H), measured at a central portion (15a) of the bottom wall (15) facing the front groove (13), the inner bottom wall (15), the pair of inner side walls (16,17) and an inner surface (14b) of the sidewall (14) defining a main chamber (19) configured to house a plate insert (51) arranged with an insert width (w) thereof parallel to the minimum cavity width (W) and an insert depth thereof extending along the longitudinal extension direction (A), where the plate insert (51) is defined by an insert width (w) which is substantially complementary to the minimum cavity width (W), by an insert height (h) which is substantially complementary to the cavity height (H) and less than the opening width (Wa) and by the insert depth, which is characterised in that the inner bottom wall (15) and the at least one inner side wall (16,17) of the pair of inner side walls (16,17) of the at least one longitudinal cavity (12,12') define at least one side extension (20,21) of the main chamber (19) configured to allow a roto-translation of the plate insert (51) inside the at least one longitudinal cavity (12,12'), wherein the opening width Wa is comprised in the range 0.5 H < Wa < 1.5 H.

## Description

### TECHNICAL FIELD

The present invention generally relates to an improved profiled construction element, in particular comprising at least one cavity for the easy insertion and removal of inserts, e.g., obtained by extrusion or rolling and typically made of aluminium, or of steel, copper, brass, light alloys, plastics or other material suitable for extrusion or rolling.

### STATE OF THE ART

In general terms, profiled elements are longitudinally extending elements characterised by the shape of their cross section (profile).

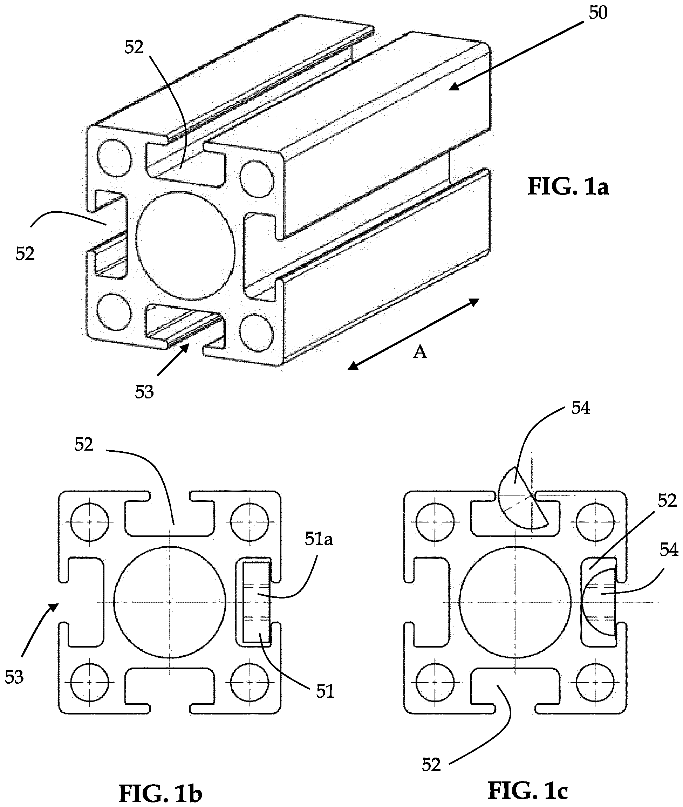

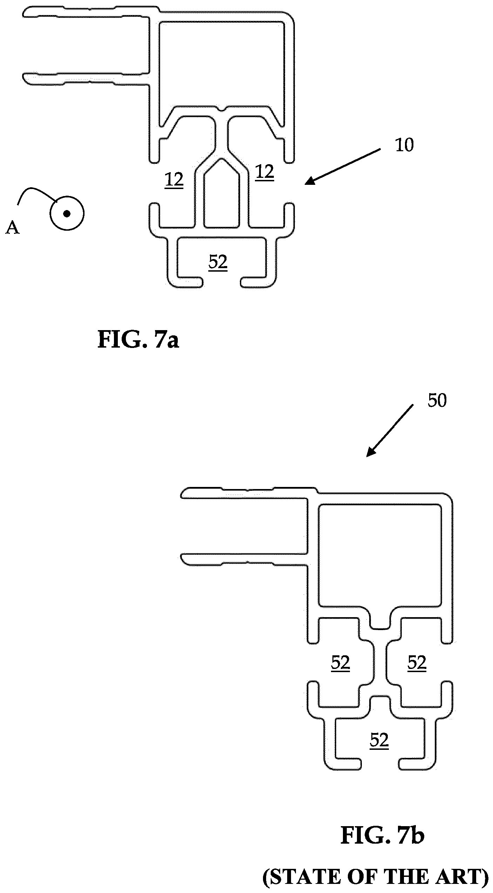

In the specific case of profiled construction elements, examples of which are shown according to the state of the art in figures 1a-1c and 7b, they have one or more cavities 52, usually having a T-shaped cross section, extending longitudinally along an extension direction A of the profiled element 50. The cavities present in the profiled elements have the purpose of housing threaded inserts 51,54, which can be positioned along the longitudinal extension of the profiled element and are required for fastening various construction elements by means of screws.

By fastening construction elements to the profiled elements, it becomes possible to make structures of various types and complexity. By way of example, by fastening construction elements to the profiled elements, it is possible to make cabins, benches, work islands provided with automation, shelving, frames and so on. Again, in the case of profiled elements having a section of specific shape, other types of structures can also be made, such as structures to support solar panels, structures and/or the sides of caissons, loading compartments for transport vehicles and so on.

The most widely used threaded inserts in the construction industry, also known as 'plates' 51, have a parallelepiped shape with a reduced height (thickness) and at least one threaded hole 51a crossing them through their thickness. In particular, the plate inserts are characterised by an elongated shape in the longitudinal extension direction of the cavity (depth), with reference to a condition of the insert housed therein.

In the known profiled elements today, the cavities 52 only allow the insertion and removal of plate inserts 51 starting from a head end of the element 50. In fact, frontally, the cavities with T-shaped cross section, hereinafter also referred to as 'T-cavities', have a groove 53 which extends along the entire length of the profiled element 50 and which is configured to allow the insertion of a threaded stem of a screw (not illustrated) which will have to cooperate with the plate insert 51, but at the same time to ensure that such a plate insert 51 does not exit from the cavity. In essence, the front groove 53 has a constant transverse dimension along the length of the profiled element 50 and is only slightly larger than the threaded hole 51 a present on the plate insert 51.

The constraint of having to insert and extract a plate insert only from the free heads of the profiled element entails several disadvantages, including poor flexibility in modifying the construction of the structure during works, should the need arise to insert further inserts in intermediate positions between others which may already have been assembled. Furthermore, the head ends are not always freely accessible as they are closed by plugs, precluded by other already-assembled elements, or otherwise arranged in positions not easily accessible.

In order to overcome the above-mentioned problems, various solutions have been devised over time, essentially consisting of the creation of shaped inserts 54, as shown in figure 1c. Such special inserts 54 have an appropriate shaping which allows the insertion and removal thereof through the front groove 53 formed by the part with the smallest section of the T-cavity. In particular, the resulting inserts 54 have a rounded shaping along the thickness thereof and a reduced extension in both the longitudinal direction parallel to the extension A of the profiled element, with respect to an insertion condition in the cavity 52, and with respect to a extension in width.

There are also inserts shaped differently with respect to what is shown in figure 1c, such as trapezoidal inserts, which can also be inserted and extracted through the front groove 53.

The known solutions, while allowing the addition of shaped inserts 54, inserting them in intermediate positions between any others which may already be assembled, are not able to offer the stability in terms of sturdiness and strength, and the grip which characterise profiled elements which make use of plate inserts 51, which, having a greater extension in both the longitudinal direction A (depth) and in width, offer a larger abutment surface against the inner walls of the cavity 52 and therefore increased stability.

Last but not least, the shaped inserts are more expensive to produce with respect to the plate inserts 51, the latter being obtainable from a basic shape with a rectangular section which is widely available on the market. In other words, the plate elements 51 are preferable to other shaped elements, such as those depicted in figure 1c, both for the greater connection stability they are able to offer and because of their constructive simplicity and thus their extremely low manufacturing cost.

### OBJECTS AND SUMMARY OF THE INVENTION

In the light of the above, the problem underlying the present invention is to devise a profiled construction element which allows the frontal insertion and removal of plate inserts.

In the context of such a problem, an object of the present invention is to make a profiled construction element which is also capable of stably retaining a plate insert inside the cavity, preventing an accidentally exit thereof.

A further obj ect of the present invention is to devise a profiled construction element which allows the frontal insertion and removal of a plate insert in the cavity in a quick and easy manner.

Still another object of the present invention is to devise a profiled construction element which allows the frontal insertion and removal of a plate insert in the cavity without the need to use specially designed work tools.

In accordance with a first aspect thereof, the invention thus relates to a profiled construction element comprising a body with a longitudinal extension with a substantially constant cross section along an extension direction, wherein the longitudinal body comprises at least one longitudinal cavity which extends along the longitudinal body, parallel to the longitudinal extension direction.

The at least one longitudinal cavity is inside the longitudinal body and is defined by at least one inner bottom wall and a pair of inner side walls.

The at least one longitudinal cavity is open at least at a front groove obtained as an opening with longitudinal extension parallel to the extension direction, made on a sidewall of the longitudinal body facing the bottom wall. Furthermore, the front groove is characterised by a certain opening width Wa.

Furthermore, the at least one longitudinal cavity is characterised by a minimum cavity width W measured between the pair of inner side walls and a cavity height H, measured at a central portion of the bottom wall facing the front groove.

The inner bottom wall, the pair of inner side walls and an inner surface of the sidewall define a main chamber configured to house a plate insert arranged with an insert width w thereof parallel to the minimum cavity width W and an insert depth thereof extending along the longitudinal extension direction, where the plate insert is defined by the insert width w which is substantially complementary to the minimum cavity width W, by an insert height which is substantially complementary to the cavity height H and less than the opening width Wa and by the insert depth.

According to the present invention, the inner bottom wall and at least one inner side wall of the pair of inner side walls of the at least one longitudinal cavity define at least one side extension of the main chamber configured to allow a roto-translation of the plate insert inside the at least one longitudinal cavity where the opening width Wa is comprised in the range 0.5 H < Wa < 1.5 H.

In the context of the present description and in the appended claims, "width substantially complementary to the cavity width" is intended to mean an insert having a width such that it can be housed to size, but with clearance inside the cavity, with reference to its transverse width measurement. An insert width w which determines a housing to size but with clearance is for example a width w less than the cavity width W by a percentage value comprised between 0.1% and 30%, preferably between 0.5% and 20%, even more preferably between 1% and 10%.

In the context of the present description and in the appended claims, "height substantially complementary to the cavity height" is intended to mean an insert having a height such that it can be housed substantially to size, but with clearance inside the cavity, with reference to its height measurement. An insert height h which determines a housing substantially to size but with clearance is for example a height h less than the cavity height H by a percentage value comprised between 10% and 50%, preferably between 15% and 40%, even more preferably between 20% and 30%.

The Applicant has identified a particular shape of the longitudinal cavity which simultaneously allows both the frontal insertion and removal of plate inserts through the groove present on the side of the body and their movement inside the cavity, so that they can assume an arrangement parallel to the side of the body and thus offer the possibility of creating a threaded coupling with the various construction elements.

At the same time, the peculiar shape of the longitudinal cavity devised by the Applicant, which envisages a suitably shaped and positioned side extension, allows the plate insert to be stably held inside the cavity once it has assumed a position parallel to the side of the body.

Furthermore, the specific proportions devised by the Applicant allow to create an optimised profiled element in terms of sturdiness, compactness and ease of use.

In fact, such a geometry allows for the insertion and removal of plate inserts with a relative height, with respect to the cavity height, which is large and therefore capable of offering a sturdy abutment for tightening the construction elements. In addition, the devised proportions allow to preserve the ability to rotate such inserts inside the cavity, thus making it possible for them to be inserted and removed from the front through the groove, even for insert heights substantially comparable to the cavity height.

Furthermore, the shape of the main chamber, which has continuous inner surfaces with no ribs or protrusions, allows an easier insertion and removal of the plate insert in the longitudinal cavity, which is facilitated by the absence of tripping, protruding or rising.

Further characteristics of the preferred embodiments of the profiled construction element according to the present invention are the subject of the dependent claims.

In particular, at least one inner side wall of the at least one longitudinal cavity comprises at least one orthogonal portion of a plane in which at least one portion of the sidewall extends, wherein the orthogonal portion extends from the inner surface of the sidewall. At the side extension, the orthogonal portion extends from the inner surface of the sidewall to a maximum of half the cavity height.

### BRIEF DESCRIPTION OF THE DRAWINGS

Further characteristics and advantages of the present invention will become clearer from the following detailed description of some preferred embodiments thereof, made with reference to the appended drawings.

The different characteristics in the individual configurations may be combined with one another as desired according to the preceding description, should there be advantages specifically resulting from a specific combination.

In such drawings,
- figures 1a, 1b and 1c are respectively a perspective view and two cross sectional views of a profiled construction element according to the state of the art in which at least one insert is visible in a cavity;
- figure 2 is a perspective view of a first embodiment of a profiled construction element according to the present invention;
- figure 2a is a cross sectional view of the profiled construction element of figure 2;
- figure 2b is an enlarged detail of figure 2a illustrating the cross section of a cavity of a profiled construction element according to the present invention;
- figure 3 is a cross sectional view of the profiled construction element of figure 2 with two plate inserts being inserted through the front groove of first cavities and two plate inserts housed in second cavities;
- figure 4 is a cross sectional view of a second embodiment of a profiled construction element in accordance with the present invention;
- figure 4a is an enlarged detail of figure 4, illustrating in particular the cross section of the cavity;
- figure 5 is a perspective view of a third embodiment of a profiled construction element according to the present invention;
- figure 5a is a cross sectional view of the profiled construction element of figure 5;
- figures 6a and 6b show cross sectional views of a cavity of a fourth and a fifth embodiment, respectively, of a profiled construction element according to the present invention;
- figure 7a is a cross sectional view of a sixth embodiment of a profiled construction element according to the present invention, in particular a profiled element for the construction of loading compartments of transport vehicles;
- figure 7b is a cross sectional view of a profiled element for the construction of loading compartments of transport vehicles according to the state of the art;
- figure 8 is a perspective view of a seventh embodiment of a profiled construction element according to the present invention, in particular a profiled construction element for the construction of loading compartments of transport vehicles; and
- figure 8a is a cross sectional view of the profile construction element of figure 8.

### DETAILED DESCRIPTION OF THE INVENTION

For the illustration of the drawings, use is made in the following description of identical numerals or symbols to indicate construction elements with the same function. Moreover, for clarity of illustration, certain references may not be repeated in all drawings.

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The use of "for example", "etc.", "or" indicates non-exclusive alternatives without limitation unless otherwise indicated. The use of "comprises" and "includes" means "comprises or includes, but not limited to", unless otherwise indicated.

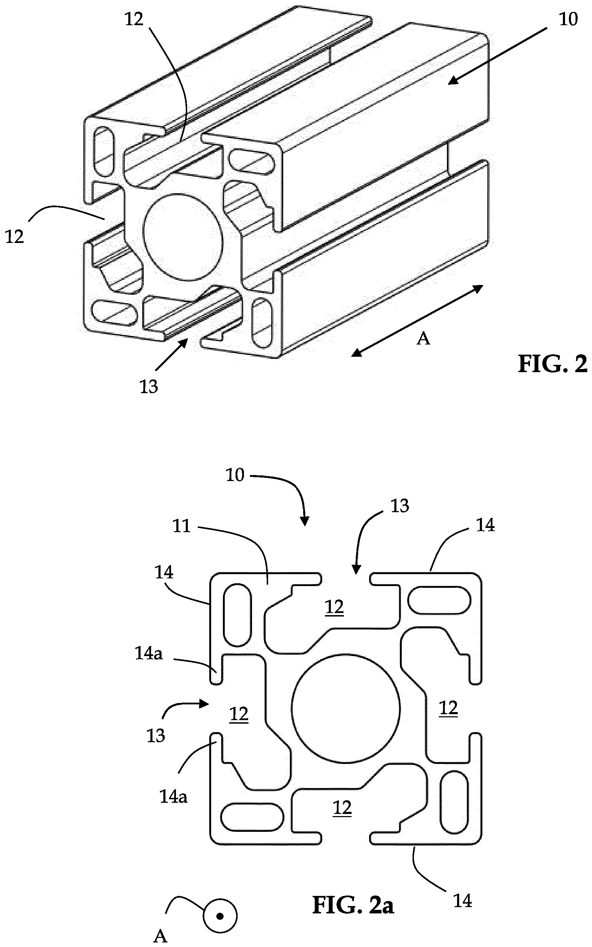

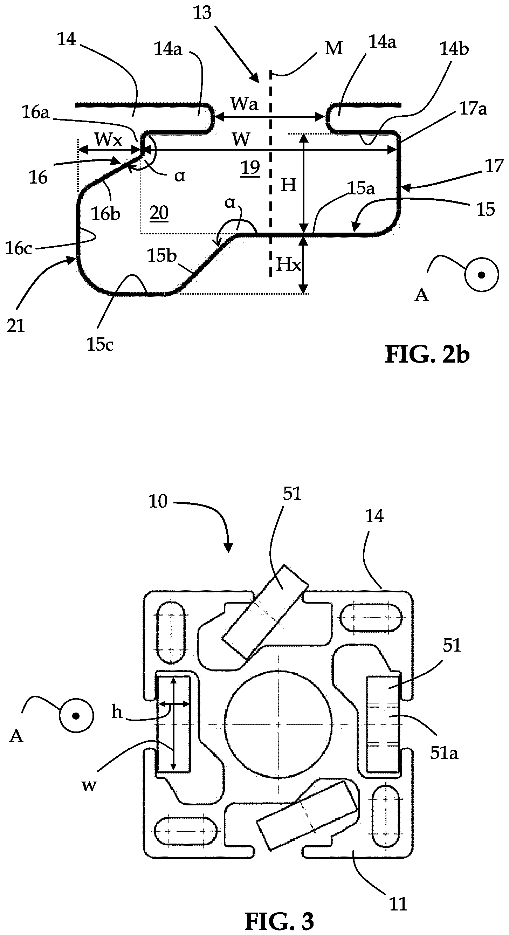

With reference to figures 2, 2a, 2b and 3, a first preferred embodiment of a profiled construction element according to the present invention is illustrated, overall indicated with 10.

The profiled element 10 comprises a body 11 with a longitudinal extension along an extension direction A and with a substantially constant cross section. In the sectional figures, the extension direction A is transverse to the plane of the sheet and has therefore been indicated in figures 2a, 2b and 3 by means of a circled dot symbolising the tip of an arrow exiting from the sheet.

The longitudinal body 11 comprises at least one longitudinal cavity 12 extending along the body 11, parallel to the longitudinal extension direction A, generally with a substantially constant cross section.

The longitudinal cavity 12 is made inside the longitudinal body 11 and is open at a front groove 13 defined between two lips 14a defining at least one portion of a sidewall 14 of the longitudinal body 11. The front groove 13 extends in the sidewall 14, parallel to the longitudinal extension direction A.

Furthermore, the longitudinal cavity 12 is preferably also open at a first and a second body head (not illustrated) which is transverse with respect to the extension direction A.

The front groove 13 defines centrally thereto a centreline plane M, orthogonal to a plane in which the two lips 14a of the sidewall 14 extend (shown in figure 2b as line M, since this is a sectional depiction). The front groove 13 is characterised by an opening width Wa illustrated in figure 2b.

At the centreline plane M, the longitudinal cavity 12 has an inner bottom wall 15 with a central portion 15a substantially parallel to the plane in which the two lips 14a of the sidewall 14 extend (hereafter also 'sidewall plane 14'). Such a parallel central portion 15a advantageously offers an abutment and acts as a possible limit switch for a screw screwed into a threaded hole 51a of a plate insert 51 housed in the cavity 12.

At the central portion 15a of the bottom wall 15, the cavity is characterised by a height H defined as the minimum distance between a geometric plane containing the central portion 15a substantially parallel to the sidewall plane 14 and a geometric plane containing an inner surface 14b of the sidewall 14 and delineating a ceiling wall of the cavity 12.

The substantially parallel central portion 15a extends around the centreline plane M for at least 0.5 mm in each direction, preferably at least 0.7 mm in each direction, more preferably at least 1 mm in each direction.

Furthermore, the longitudinal cavity 12 is internally delimited by a first 16 and a second 17 inner side wall, each having at least one respective portion 16a,17a orthogonal to the sidewall plane 14. The orthogonal portions 16a, 17a start from the inner surface 14b of the sidewall 14 and extend at least 0.5 mm, preferably at least 0.7 mm, more preferably at least 1 mm.

The cavity is characterised by a minimum width W measured as the minimum distance between geometric planes containing the orthogonal portions 16a, 17a of the first 16 and second 17 side walls, respectively.

In the illustrated embodiments, the orthogonal portions 16a, 17a of the first 16 and second 17 side walls, respectively, are arranged equidistant from the centreline plane M. In alternative embodiments (not illustrated), the orthogonal portions 16a, 17a of the first 16 and the second 17 side walls, respectively, can be differently spaced from the centreline plane M.

The inner bottom wall 15, the pair of inner side walls 16,17 and the inner surface 14b of the sidewall 14 define, inside the longitudinal cavity 12, a main chamber 19 (illustrated through the dashed line in figure 2b) configured to house a plate insert 51 arranged parallel to the plane of the sidewall 14 of the longitudinal body 11, when the plate insert 51 is housed in the cavity 12. In particular, the parallel arrangement of the plate insert 51 with respect to the sidewall plane 14 occurs when the plate insert 51 is arranged in the cavity 12 with the insert width w thereof parallel to the minimum cavity width W.

Specifically, the plate insert 51 has an insert width w substantially complementary to the minimum cavity width W and an insert height h substantially complementary to the cavity height H, but in any case less than the opening width Wa and an insert depth (not illustrated) extending along the extension direction A. In particular, the insert height h is greater than at least half the height H of the cavity 12, preferably greater than at least 0.6 times the height H of the cavity, more preferably greater than at least 0.7 times the height H of the cavity. Furthermore, the opening width Wa is comprised in the range of 0.5 H < Wa < 1.5 H, preferably 0.6 H < Wa < 1.35 H, more preferably 0.7 H < Wa < 1.15 H.

According to the present invention, the bottom wall 15 and the at least one side wall 16,17 define at least one side extension 20,21 of the main chamber 19 configured to allow a roto-translation of the plate insert 51 inside the at least one longitudinal cavity 12.

To this end, in the embodiment of figures 2, 2a, 2b and 3, the bottom wall 15 and at least one side wall 16 comprise at least a second wall portion 15b, 16b bordering, respectively, the parallel central wall 15a and the orthogonal wall 16a of the corresponding side wall 16, wherein the second wall portions 15b,16b are arranged and configured to define an inlet portion 20 shaped like a slide.

The slide-shaped inlet portion 20 is terminated by a closed bottom 21 delineated by third wall portions 15c, 16c of the bottom wall 15 and at least one side wall 16, respectively. The closed bottom 21 is shaped to create a stop to the translation of a plate insert 51 in the inlet portion 20 and allow a partial rotation thereof. In particular, in the embodiment illustrated, the third wall portions 15c, 16c are substantially orthogonal to each other and each inclined with respect to the respective second wall portions 15b,16b with which they border.

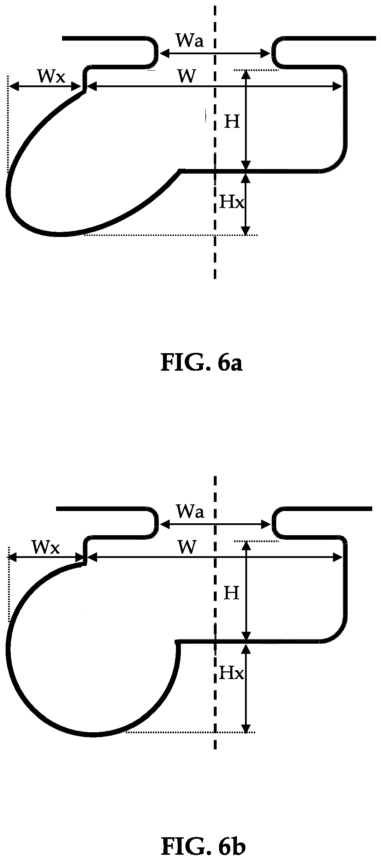

In alternative embodiments, illustrated in figures 6a and 6b, the combined second 15b, 16b and third 15c, 16c wall portions of the bottom wall 15 and the at least one side wall 16,17 respectively define a rounded, substantially circular or oval-shaped extension incorporating both the inlet portion and the bottom portion.

In detail, the second wall portions 15b,16b are arranged inclined with respect to the central parallel portion 15a of the bottom wall 15 and the orthogonal wall 16a of the corresponding side wall 16 so as to internally form in the cavity 12 an angle α greater than 180°, for example an angle greater than or equal to 190°, preferably an angle greater than or equal to 210°, more preferably an angle greater than or equal to 220°, as shown in figure 2a, or an angle substantially equal to 270°, as in the case of a rounded extension of substantially circular shape shown in figure 6b.

In the embodiment of figure 2b, the combined second 15b,16b and third 15c, 16c wall portions determines an extension width Wx equal to at least one fifth of the opening width Wa, e.g., an extension width Wx comprised between 0.20 Wa and 5.00 Wa, preferably between 0.23 Wa and 3.00 Wa, more preferably between 0.25 Wa and 1.00 Wa.

In the context of the present description and in the appended claims, "extension width Wx" is intended to indicate an extension of the side extension 20,21 along a direction orthogonal to the orthogonal portions 16a,17a of the first 16 and second 17 side wall respectively beyond the minimum width W of the cavity 12.

Furthermore, preferably, the combined second 15b,16b and third 15c, 16c wall portions determines an extension height Hx also equal to at least one fifth of the opening width Wa, for example an extension height Hx comprised between 0.20 Wa and 5.00 Wa, preferably between 0.23 Wa and 3.00 Wa, more preferably between 0.25 Wa and 1.00 Wa.

In the context of the present description and in the appended claims, "extension height Hx" is intended to indicate an extension of the side extension 20,21 along a direction orthogonal to the central portion 15a of the bottom wall 15 beyond the height H of the cavity 12.

Furthermore, the substantially parallel central portion 15a of the bottom wall 15 extends around the centreline plane M for a maximum of half the width of the opening Wa in the direction in which the bottom wall comprises the at least a second inclined wall portion 15b.

Again, at the inlet portion 20 of the side extension, the orthogonal portion 16a, 17a of the respective side wall 16,17 extends from the inner surface 14b of the sidewall 14 for a maximum of half the height H of the cavity 12, preferably for a maximum of 0.4 times the height of the cavity H, more preferably for a maximum of 0.3 times the height of the cavity H.

Thereby, advantageously, a plate insert 51 of the relative dimensions indicated above with reference to the dimensions of the main chamber 19 housing it can still be rotated inside the cavity 12. It is thereby possible to make compact profiled elements 10, in particular with cavities 12 having a height H which is not excessively greater than the height h of the plate insert 51 for the housing of which the profiled element is designed, which in any case allow a rotation of the insert 51 therein.

In figure 3 it can be noted how, thanks to the presence of the side extension 20,21 of the longitudinal cavity 12, it is possible to insert/extract a plate insert through the front groove 13.

In the cavity 12 shown further up in figure 3, it can be noted that the inlet portion 20 of the side extension allows to accommodate the plate insert 51, so that it can be inserted substantially entirely in the cavity 12, as shown in the lower cavity in figure 3.

It should further be noted that, thanks to the particular dimensional choice of the second 15b, 16b and third 15c,16c wall portions, the plate insert 51 can enter the inlet portion 20 of the side extension for over half the width w thereof. Thanks to such dimensioning, the insert 51 is thus free to rotate to arrange itself parallel to the respective sidewall plane 14, as shown in the side cavities of figure 3.

Again, the presence of orthogonal portions 16a,17a of the side walls 16,17 at the inlet portion 20 of the side extension, offers an abutment to the plate insert 51, once arranged parallel to the sidewall plane 14, which prevents it from sliding back into the side extension 20,21 regardless of the orientation in space of the profiled construction element 10, i.e., regardless of how the plate 51 may weigh inside the cavity 12.

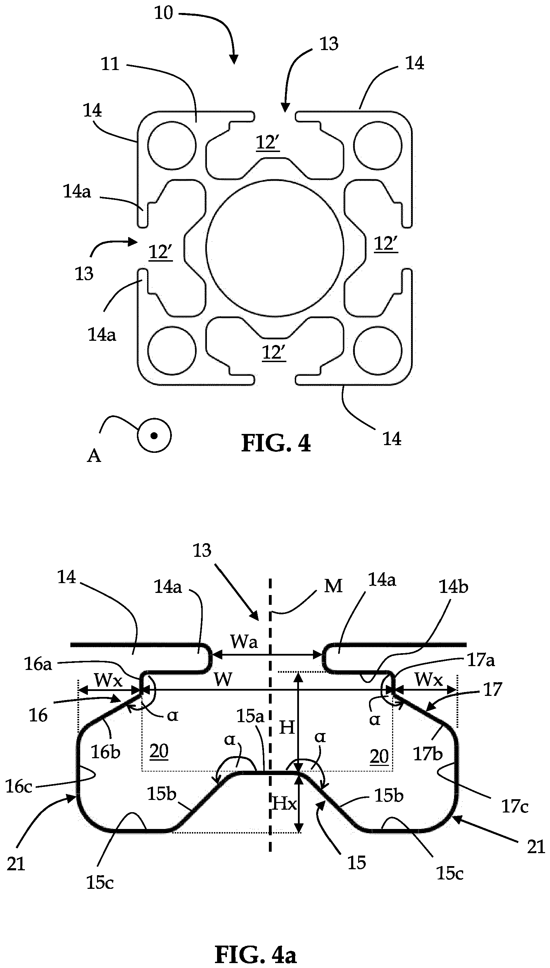

Figure 4 shows a second embodiment of a profiled construction element 10 according to the present invention in which the longitudinal cavities 12' each have two side extensions 20,21, each configured to at least partially accommodate a plate insert 51 and allow the rotation thereof inside the cavity 12'.

In this case, both side walls 16,17 of the cavities 12' comprise a second wall portion 16b, 17b bordering a respective orthogonal wall 16a, 17a. Furthermore, the bottom wall 15 also comprises two second wall portions 15b both bordering the parallel central wall 15a, on opposite sides of such a central portion 15a, wherein each second portion 15b of the bottom wall 15 defines, with a respective second portion 16b, 17b of the side walls 16,17, a respective slide-shaped inlet portion 20 of the side extension.

Also in this case, the inlet portions 20 are terminated by a respective closed bottom 21 delineated by third wall portions 15c,16c,17c of the bottom wall 15 and the respective side walls 16,17.

Even in the presence of two side extensions 20,21 in the same cavity 12', the set of second 15b, 16b, 17b and third 15c, 16c, 17c wall portions of the bottom wall 15 and of the two side walls 16,17 respectively may define, as an alternative to the slide shape illustrated in figure 4, a rounded side extension, substantially circular or oval in shape, incorporating both the inlet portion 20 and the bottom wall portion 21, for example of the type illustrated in figures 6a and 6b.

Also for the second side extension 20,21 of the same cavity 12', the same considerations apply as above with respect to the size and shape of the single side extension 20,21.

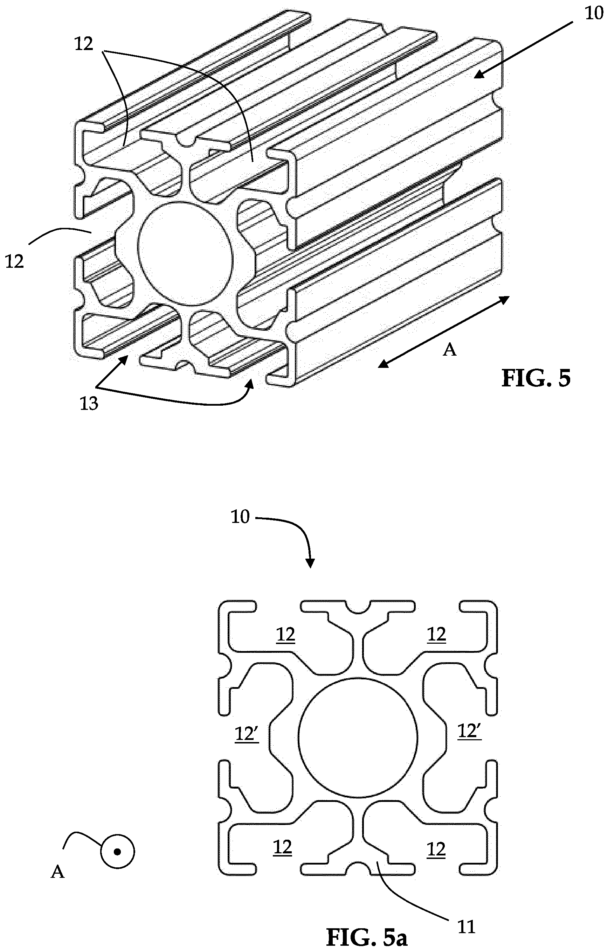

Figure 5 shows a third embodiment of a profiled construction element 10 according to the present invention in which there are either longitudinal cavities 12 each having only one side extension 20,21 configured to at least partially accommodate a plate insert 51 and allow the rotation thereof inside the cavity 12, or longitudinal cavities 12' each provided with two side extensions 20,21.

Figures 6a and 6b show a fourth and a fifth embodiment of a profiled construction element 10 according to the present invention, in particular having a rounded side extension 20,21 incorporating both the inlet portion 20 and the bottom portion 21. In particular, a side extension with a substantially elliptical section is shown in figure 6a and a side extension with a substantially circular section is shown in figure 6b.

Both in the case of a side extension 20,21 with a substantially elliptical section, and in the case of a side extension 20,21 with a substantially circular section, such side extension 20,21 has an extension width Wx equal to at least one-fifth of the opening width Wa, e.g., an extension width Wx comprised between 0.20 Wa and 5.00 Wa, preferably between 0.23 Wa and 3.00 Wa, more preferably between 0.25 Wa and 1.00 Wa.

Furthermore, preferably, the side extension 20,21 has an extension height Hx also equal to at least one fifth of the opening width Wa, for example an extension height Hx comprised between 0.20 Wa and 5.00 Wa, preferably between 0.23 Wa and 3.00 Wa, more preferably between 0.25 Wa and 1.00 Wa.

Figure 7a shows a sixth embodiment of a profiled construction element 10 according to the present invention, in particular for the construction of loading compartments of transport vehicles.

In the embodiment of Figure 7a, the profiled construction element 10 comprises a pair of longitudinal cavities 12 each having a single side extension 20,21 configured to at least partially accommodate a plate insert 51 and allow the rotation thereof inside the cavity 12, and a longitudinal cavity 52 shaped as known in the state of the art and shown in figure 7b.

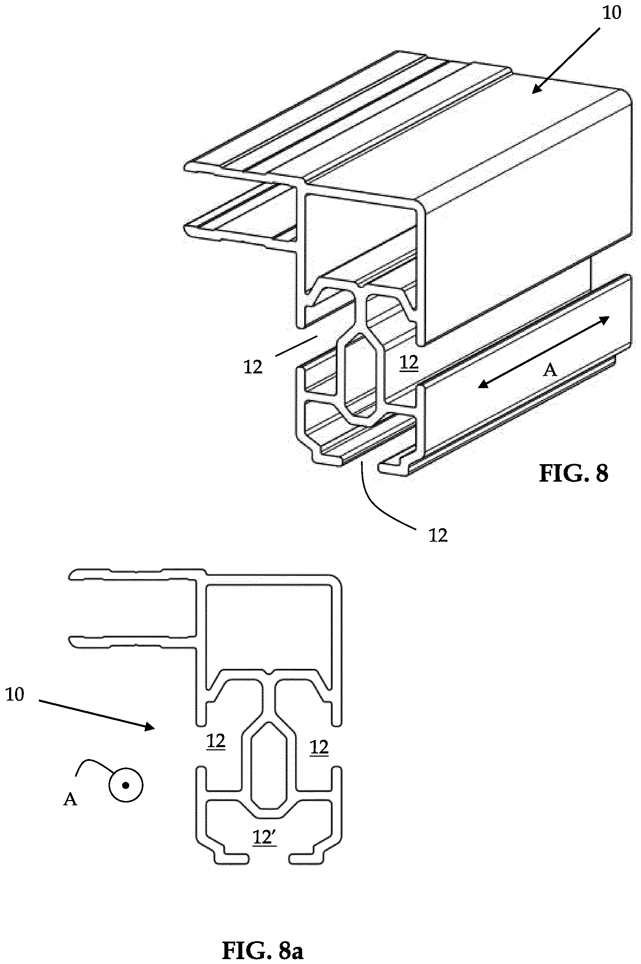

Figures 8 and 8a show a seventh embodiment of a profiled construction element 10 according to the present invention, in particular for the construction of loading compartments of transport vehicles.

In the embodiment of Figure 8 and 8a, the profiled construction element 10 comprises a pair of longitudinal cavities 12 each having a single side extension 20,21 configured to at least partially accommodate a plate insert 51 and allow the rotation thereof inside the cavity 12, and a longitudinal cavity 12' provided with two side extensions 20,21.

## Claims

1. Profiled construction element (10) comprising a body (11) with longitudinal extension with a substantially constant cross section along an extension direction (A),
wherein the longitudinal body (11) comprises at least one longitudinal cavity (12,12') which extends along the longitudinal body (11), parallel to the longitudinal extension direction (A),
the at least one longitudinal cavity (12,12') being obtained inside the longitudinal body (11) and being defined by at least one inner bottom wall (15) and a pair of inner side walls (16,17),
the at least one longitudinal cavity (12,12') being open at least at a front groove (13) obtained as an opening with longitudinal extension parallel to the extension direction (A) made on a sidewall (14) of the longitudinal body (11) facing the bottom wall (15), the front groove (13) being **characterised by** an opening width (Wa),
the at least one longitudinal cavity (12,12') being **characterised by** a minimum cavity width (W), measured between the pair of inner side walls (16,17), and a cavity height (H), measured at a central portion (15a) of the bottom wall (15) facing the front groove (13),
the inner bottom wall (15), the pair of inner side walls (16,17) and an inner surface (14b) of the sidewall (14) defining a main chamber (19) configured to house a plate insert (51) arranged with an insert width (w) thereof parallel to the minimum cavity width (W) and an insert depth thereof extending along the longitudinal extension direction (A), where the plate insert (51) is defined by the insert width (w) which is substantially complementary to the minimum cavity width (W), by an insert height (h) which is substantially complementary to the cavity height (H) and less than the opening width (Wa), and by the insert depth,
**characterised in that** the inner bottom wall (15) and at least one inner side wall (16,17) of the pair of inner side walls (16,17) of the at least one longitudinal cavity (12,12') define at least one side extension (20,21) of the main chamber (19) configured to allow a roto-translation of the plate insert (51) inside the at least one longitudinal cavity (12,12'), where the opening width Wa is comprised in the range 0.5 H < Wa < 1.5 H.

2. Profiled construction element (10) according to claim 1, wherein the at least one inner side wall (16,17) of the at least one longitudinal cavity (12,12') comprises at least one portion (16a, 17a) orthogonal to a plane in which at least a portion of the sidewall (14) extends and which extends from the inner surface (14b) of the sidewall (14) and wherein at the side extension (20,21), the orthogonal portion (16a,17a) extends from the inner surface (14b) of the sidewall (14) for a maximum of half the cavity height (H).

3. Profiled construction element (10) according to claim 2,
wherein the orthogonal portion (16a, 17a) extends from the inner surface (14b) of the sidewall (14) by at least 0.5 mm, preferably at least 0.7 mm, more preferably at least 1 mm; and/or
wherein at the side extension (20,21), the orthogonal portion (16a,17a) extends from the inner surface (14b) of the sidewall (14) by a maximum of 0.4 times the cavity height (H), preferably for a maximum of 0.3 times the cavity height (H).

4. Profiled construction element (10) according to any one of the preceding claims,
wherein the at least one side extension (20,21) has an extension width (Wx) equal to at least one fifth of the opening width (Wa), preferably an extension width (Wx) comprised between 0.20 Wa and 5.00 Wa, more preferably between 0.23 Wa and 3.00 Wa, even more preferably between 0.25 Wa and 1.00 Wa; and/or
wherein the at least one side extension (20,21) has an extension height (Hx) equal to at least one-fifth of the opening width (Wa), preferably an extension height (Hx) comprised between 0.20 Wa and 5.00 Wa, more preferably between 0.23 Wa and 3.00 Wa, even more preferably between 0.25 Wa and 1.00 Wa.

5. Profiled construction element (10) according to any one of the preceding claims, wherein the front groove (13) defines centrally thereto a centreline plane (M) orthogonal to a plane in which at least one portion of the sidewall (14) extends, and the inner bottom wall (15) comprises a central portion (15a) substantially parallel to the plane in which at least one portion of the sidewall (14) located at the centreline plane (M) extends.

6. Profiled construction element (10) according to claim 5,
wherein the substantially parallel central portion (15a) of the inner bottom wall (15) extends around the centreline plane (M) for at least 0.5 mm in each direction, preferably at least 0.7 mm in each direction, more preferably for at least 1 mm in each direction, and/or
wherein the substantially parallel central portion (15a) of the inner bottom wall (15) extends around the centreline plane (M) for a maximum of half the opening width (Wa) in at least one direction in which the side extension (20,21) extends.

7. Profiled construction element (10) according to any one of the preceding claims,
wherein the side extension (20,21) comprises an inlet portion (20) shaped like a slide (20) and a closed bottom portion (21) which closes and terminates the inlet portion (20); or
wherein the side extension (20,21) is rounded, e.g., having a cross section in the extension direction (A) of substantially circular or oval shape.

8. Profiled construction element (10) according to any one of the preceding claims, wherein the bottom wall (15) and the at least one side wall (16,17) each comprise at least one second wall portion (15b,16b, 17b) which borders respectively with a central portion (15a) of the inner bottom wall (15) and with an orthogonal portion (16a,17a) of a corresponding side wall (16,17), wherein the second wall portions (15b,16b,17b) are arranged inclined respectively with respect to the parallel central portion (15a) of the bottom wall (15) and to the at least one orthogonal wall portion (16a,17a) of the corresponding side wall (16,17) so as to internally form in the cavity (12) an angle (α) greater than 180°, such as for example an angle greater than or equal to 190°, preferably an angle greater than or equal to 210°, more preferably an angle greater than or equal to 220°, or an angle substantially equal to 270°.

9. Profiled construction element (10) according to any one of the preceding claims, wherein the bottom wall (15) and the at least one side wall (16,17) each comprise at least one second wall portion (15b, 16b, 17b) which borders respectively with a central portion (15a) of the inner bottom wall (15) and with an orthogonal portion (16a,17a) of a corresponding side wall (16,17), wherein the second wall portions (15b,16b,17b) are arranged and configured so as to define an inlet portion (20) shaped like a slide (20) of the side extension (20,21).

10. Profiled construction element (10) according to claim 9, wherein the bottom wall (15) and the at least one side wall (16,17) each comprise at least one third wall portion (15c,16c,17c) which borders the respective second wall portion (15b,16b,17b), the third wall portions (15c, 16c, 17c) being connected and substantially orthogonal to each other and each inclined with respect to the respective second wall portion (15b, 16b, 17b) with which it borders.
